# EUROPÄISCHE PATENTSCHRIFT

(11) **EP 1 512 715 B1**
(45) Veröffentlichungstag und Bekanntmachung des Hinweises auf die Patenterteilung: **10.05.2006**
(21) Anmeldenummer: 04020000.8
(22) Anmeldetag: 24.08.2004
(51) Int. Cl.: C08J 11/08, C08L 67/02, B01D 11/02

(54) **Verfahren und Vorrichtung zur Aufbereitung von Kunststoffabfällen enthaltend verunreinigtes Polyethylenterephthalat**
Process and device for the treatment of plastics waste containing contaminated polyethylene terephthalate
Procédé et dispositif pour le traitement de déchets de plastiques contenant du téréphthalate de polyéthylène contaminé

(30) Priorität: 03.09.2003 DE 10340524
(43) Veröffentlichungstag der Anmeldung: 09.03.2005
(73) Patentinhaber: Lorenz, Arnulf, 01169 Dresden (DE); Nitsche, Manfred Dr., D-21147 Hamburg (DE)
(72) Erfinder: Lorenz, Arnulf, 01169 Dresden (DE); Nitsche, Manfred Dr., D-21147 Hamburg (DE)
(74) Vertreter: Thomas, Götz

(56) Entgegenhaltungen:
- WO-A-96/24630
- US-A- 4 064 112

## Beschreibung

Die Erfindung betrifft ein Verfahren und eine Vorrichtung zur Aufbereitung von Kunststoffabfällen, die verunreinigtes Polyethylenterephthalat (PET) enthalten, gemäß dem Oberbegriff der Patentansprüche 1 bzw. 8.

Derartige Kunststoffabfälle aus verunreinigtem PET umfassen insbesondere ausgesonderte Verpackungsbehälter aus PET, zum Beispiel leere Einwegflaschen oder unbrauchbare Mehrwegflaschen aus PET, die Verunreinigungen in Form von aufgeklebten Etiketten aus Papier, Bedruckfarben oder Deckeln aus andern Kunststoffmaterialien enthalten können, was eine unmittelbare Wiederverwendung der PET-Abfälle zur erneuten Herstellung von Verpackungsbehältern oder anderen hochwertigen Gegenständen unmöglich macht. Die genannten Kunststoffabfälle können jedoch zum Beispiel auch verunreinigte Produktionsabfälle einschließen, die bei der Herstellung von Verpackungsmaterial oder anderen Gegenständen, zum Beispiel Magnetbändern, Disketten oder dergleichen Speichermedien aus PET anfallen.

Bei den bisher üblichen Verfahren zur Aufbereitung von Getränkeflaschen oder anderen Abfall- bzw. Reststoffen aus PET wird das aufzubereitende Material, gewöhnlich nach einer Vorzerkleinerung und einer nachfolgenden Schwimm-Sink-Abscheidung zum Abtrennen von Polyolefinen, mit einer wässrigen Reinigungslauge behandelt, um Papieretiketten abzulösen oder Etikettenkleberrückstände zu entfernen. Die dabei zugleich mit der Dekontamination und Reinigung der PET-Oberflächen ablaufende unvermeidbare teilweise hydrolytische Spaltung des PET durch die alkalische Reinigungslauge erlaubt jedoch ohne eine aufwendige Nachkondensation keine hochwertige Weiterverarbeitung. Außerdem hat das bekannte Verfahren die weiteren Nachteile, dass durch die hydrolytische Zersetzung ein Teil des PET verloren geht, dass bei der Behandlung große Mengen an verbrauchter Reinigungslauge anfallen, die mit belastetem Papierschlamm aus Papieretiketten und organischen sowie anorganischen Schadstoffen aus Druckfarben usw. verunreinigt ist und unter hohen Kosten sowie unter starker Belastung der Umwelt entsorgt werden muss, und dass zuletzt bei der vorgeschalteten Schwimm-Sink-Abscheidung von Polyolefinen riesige Abwassermengen anfallen.

Aus der DE 195 31 886 A1 sind bereits ein Verfahren und eine Vorrichtung der eingangs genannten Art zur Rückgewinnung von PET oder anderen Polymeren aus beschichteten Folienabfällen bekannt. Bei dem bekannten Verfahren werden die vorzerkleinerten Folienabfälle in einem Durchflussmischer mit organischen Lösemitteln behandelt, welche anschließend mittels eines Fördersiebes wieder mechanisch von den behandelten Folienabfällen getrennt werden. Die organischen Lösemittel sind dort jedoch nur ein Bestandteil einer wässrigen alkalischen Reinigungsflüssigkeit, die in einem komplizierten mehrstufigen Verfahren mit den Folienabfällen in Berührung gebracht wird und im Wesentlichen die gleichen Probleme wie die oben genannten Reinigungslaugen verursacht.

Aus der WO 96/24630 A1 ist ein weiteres Verfahren der eingangs genannten Art zur Aufbereitung von Polyestern, insbesondere PET, bekannt, bei dem Polyesterschnitzel mit einem organischen Lösemittel, u.a. Ethylacetat, behandelt und nach der Behandlung vom Lösemittel getrennt und getrocknet werden.

Ausgehend hiervon liegt der Erfindung die Aufgabe zugrunde, ein Verfahren und eine Vorrichtung der eingangs genannten Art dahingehend zu verbessern, dass eingesetzte Kunststoffabfälle aus PET in Form eines hochwertigen PET-Recyclats vollständig zurückgewonnen werden können, wobei eine merkliche hydrolytische Zersetzung beim Reinigungsvorgang sowie ein Anfall von großen Mengen Abwasser oder schadstoffbelasteter Reinigungsflüssigkeit vermieden wird, und wobei sich die Reinigungsflüssigkeit im geschlossenen System im Kreislauf führen lässt.

Diese Aufgabe wird erfindungsgemäß durch die in den Ansprüchen 1 bzw. 8 angegebenen Merkmalskombinationen gelöst.

Bei dem erfindungsgemäßen Verfahren wird nach der Behandlung der Kunststoffabfälle das Polyethylenterephthalat von anderen darin enthaltenen Kunststoffen getrennt und dann in einem Behälter bei einer Temperatur von 160°C bis 190°C und einem Druck von < 20 mbar einer Vakuumtrocknung unterzogen, wobei es mit einem Inertgas gespült wird, um restliches Lösemittel, Wasser und Schadstoffe auszutreiben und das Polyethylenterephthalat auf die gewünschte oder geforderte Molmasse zu rekonditionieren. Die zur Durchführung des Verfahrens dienende erfindungsgemäße Vorrichtung umfasst neben einem Reaktor zur Behandlung der Kunststoffabfälle mit dem Lösemittel und Einrichtungen zur mechanischen Abtrennung eines Teils des Lösemittels von den Kunststoffabfällen Einrichtungen zur Abtrennung des Polyethylenterephthalats von anderen in den Kunststoffabfällen enthaltenen Kunststoffen und einen mit einem Inertgas beaufschlagbaren Vakuumtrockner zur Trocknung und Rekonditionierung des abgetrennten Polyethylenterephthalats.

Bei der Vakuumtrocknung der Kunststoffabfälle verdampft das oberflächlich auf den Kunststoffabfällen anhaftende Lösemittel und wird so von diesen getrennt. Außerdem wird das während der vorangehenden Lösemittelbehandlung in die Polymermatrix der Kunststoffabfälle aus PET eindiffundierte Lösemittel wieder aus der Matrix ausgetrieben, wobei infolge eines Schleppeffekts kurzkettige Oligomere und Schadstoffe vom Lösemittel mitgeführt werden. Durch das im Rahmen dieser Patentanmeldung als Rekonditionierung bezeichnete Herauslösen der kurzkettigen Oligomere und Schadstoffe aus dem PET kann die Qualität des zurückgewonnenen Recyclats bedeutend verbessert werden. Gleichzeitig wird durch die Spülung mit dem Inertgas eine oxidative und thermische Schädigung der Oberflächen des zerkleinerten PET vermieden, wodurch auf eine aufwändige Nachkondensation zur Wiederherstellung der Molekülmasse verzichtet werden kann. Das nach der Behandlung und der Vakuumtrocknung als Endprodukt erhaltene Recyclat besitzt vergleichbare Eigenschaften wie neuwertiges PET und kann ohne weitere Maßnahmen zur Herstellung qualitativ hochwertiger Gegenstände verwendet werden.

Um insbesondere bei der Behandlung von Kunststoffabfällen in Form von Flaschen eine gleichmäßige Benetzung der Oberflächen während der Behandlung sicherzustellen, werden sie vor der Behandlung mit dem organischen Lösemittel vorzugsweise zu Schnitzeln oder Flakes zerkleinert. Darüber hinaus werden sie bevorzugt einer mechanischen Trockenvorreinigung unterzogen, bei der nicht oder nur lose an den Kunststoffabfällen anhaftende Fremdkörper, wie mineralische Verunreinigungen oder metallische Fremdkörper ausgesondert werden.

Die Behandlung der Kunststoffabfälle selbst erfolgt bevorzugt im Gegenstrom mit temperiertem Lösemittel, um dessen Wirksamkeit zu verbessern. Ein zur Behandlung von PET besonders wirksames Lösemittel ist wasserhaltiges Ethylacetat mit einer Temperatur von 40 bis 65°C, das nach der Behandlung durch Destillation von den mitgeführten Verunreinigungen befreit und dann im Kreislauf einer Wiederverwendung zugeführt werden kann. Grundsätzlich können jedoch auch andere bekannte organische Lösemittel allein oder in Kombination mit Ethylacetat bzw. anderen Lösemitteln verwendet werden, vorausgesetzt sie eignen sich erstens zum Ablösen der an den Oberflächen der jeweiligen Kunststoffabfälle anhaftenden Verunreinigungen, zweitens zur Beseitigung von eventuell vorhandener Geruchstoffe und diffundieren drittens in die PET-Matrix ein, so dass in dieser enthaltene Kontaminate und polymere Abbauprodukte ohne eine hydrolytische oder thermische Schädigung der Matrix herausgelöst werden können.

Nach der Behandlung werden die Kunststoffabfälle aus dem Reaktor entnommen, wobei sie je nach Art und Weise der Entnahme mehr oder weniger stark mit dem Lösemittel vermischt sind. Vor der Weiterbehandlung der Kunststoffabfälle wird daher zweckmäßig zumindest ein Teil und bevorzugt der größte Teil des Lösemittels in einem Flüssigkeitsabscheider mechanisch von den festen Kunststoffabfällen getrennt. Der Flüssigkeitsabscheider wird bevorzugt von einem Zentrifugalabscheider gebildet, um einen guten Trennwirkungsgrad zu erzielen. Das aus dem Flüssigkeitsabscheider austretende Lösemittel wird zweckmäßig zwischengespeichert, um es in Abhängigkeit von seiner Verschmutzung entweder zwecks Verbesserung der Nachreinigung der Kunststoffabfälle durch den Flüssigkeitsabscheider zu rezirkulieren oder es zusammen mit dem Lösemittel aus dem Reaktor durch Destillation zu reinigen und anschließend im Kreislauf einer Wiederverwendung zuzuführen.

Zur Abtrennung von in den Kunststoffabfällen enthaltenem leichterem Kunststoffmaterial, wie beispielsweise aus Flaschendeckeln stammendem Polyethylen, Polypropylen oder anderen leichten Polyolefinen, werden die aus dem Flüssigkeitsabscheider abgezogenen Kunststoffabfälle vorzugsweise in einen Schwimm-Sink-Abscheider geleitet, der Wasser als Trennmedium enthält. Die Kunststoffabfälle werden dort einer Dichtetrennung unterzogen, wobei man eine das PET enthaltende Schwergutfraktion mit einer Dichte von mehr als etwa 1 g/cm³ und eine die spezifisch leichteren Polyolefine enthaltende Leichtgutfraktion mit einer Dichte von weniger als etwa 1 g/cm³ erhält. Das bei der Schwimm-Sink-Trennung verwendete Wasser kann im Kreislauf geführt werden, da die in den Schwimm-Sink-Abscheider zugeführten Kunststoffabfälle praktisch keine wasserlöslichen Verunreinigungen mehr enthalten.

Die im Schwimm-Sink-Abscheider abgetrennte, nunmehr aus sortenreinem PET bestehende Schwergutfraktion wird dann zum Vakuumtrockner transportiert, in dem bei einem Unterdruck von unter 50 mbar und vorzugsweise zwischen 5 und 10 mbar und bei einer Temperatur zwischen 160°C und 190°C und vorzugsweise zwischen 170°C und 180°C oberflächlich anhaftendes Lösemittel und Wasser verdampft und zuvor in die Polymermatrix des PET eindiffundiertes Lösemittel wieder aus dieser ausgetrieben wird. Da vom ausgetriebenen Lösemittel auch kurzkettige polymere Abbauprodukte, wie Oligomere, und andere im Lösemittel lösliche Schadstoffe aus der Polymermatrix heraus mitgeschleppt werden, wird das PET im Vakuumtrockner rekonditioniert, so dass es wieder die bei seiner Herstellung ursprünglich vorhandene Molekularmasse und somit dieselben Materialeigenschaften wie neuwertiges PET besitzt. Durch Veränderung der Trocknungsbedingungen im Vakuumtrockner kann diese Molekularmasse darüber hinaus auch noch in begrenztem Rahmen auf einen gewünschten Wert eingestellt werden.

Die im Schwimm-Sink-Abscheider vom PET getrennten Polyolefine, d.h. die Leichtgutfraktion, werden in einem separaten Trockner unter Vakuum vom Lösemittel und Wasser befreit, so dass sie als Rohstoff wiederverwendet werden können.

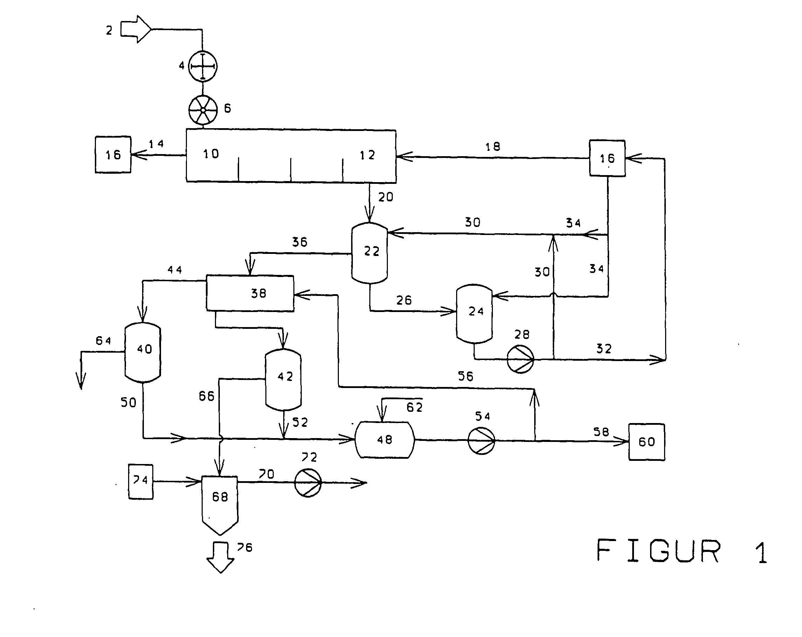

Im folgenden wird die Erfindung anhand eines in der Zeichnung dargestellten Ausführungsbeispiels näher erläutert, wobei die einzige Figur schematisch ein Fließbild der Stoffströme bei der Durchführung des erfindungsgemäßen Verfahrens in einer Anlage zur Aufbereitung von Kunststoffabfällen aus verunreinigtem PET zeigt.

Die in der Zeichnung dargestellte Anlage dient zur hochwertigen Aufbereitung von Kunststoffabfällen, die im Wesentlichen aus verunreinigtem PET bestehen, vorzugsweise zur Aufbereitung von weggeworfenen Einwegflaschen aus PET, die zusammen mit anderen wiederverwertbaren Reststoffen eingesammelt und durch eine Vorsortierung grob von anderen Reststoffen getrennt worden sind, oder von unbrauchbar gewordenen Mehrwegflaschen aus PET, die von Getränkeabfüllern ausgesondert worden sind, wobei diese Kunststoffabfälle jedoch unter anderem durch aufgeklebte Etiketten, Verschlüsse aus Polyethylen oder Polypropylen oder bei der Vorsortierung fehlgeleitete Getränkeflaschen aus anderen Kunststoffen verunreinigt sind.

Die aufzubereitenden Kunststoffabfälle 2 werden zuerst in trockenem Zustand, d.h. ohne Wasserzugabe, in einem Shredder 4 mechanisch zu Schnitzeln oder sogenannten Flakes mit einer Größe von etwa 0,5 bis 3 cm² zerkleinert und anschließend auf Sieben oder in Zyklonen (nicht dargestellt) mechanisch vorgereinigt, um eine bei der Zerkleinerung im Shredder erzeugte Feinkornfraktion sowie kleine Steinchen, Sand oder dergleichen Fremdkörper zu entfernen.

Die vorgereinigten trockenen Flakes werden durch eine zum Beispiel mit einer Zellenradschleuse 6 versehene Einlassöffnung in einen geschlossenen Reaktor, beispielsweise einen Mehrkammer-Extrakteur 8, eingebracht, in dem sie in mehreren Stufen im Gegenstrom mit einem aus Ethylacetat bestehenden erwärmtem flüssige Lösemittel in Kontakt gebracht werden. Beim Kontakt mit dem Lösemittel werden die PET-Flakes entfettet und geruchsfrei gemacht sowie von Etiketten, Etikettenkleber und anderen oberflächlich anhaftenden Verunreinigungen befreit. Außerdem diffundiert ein Teil des Lösemittels in die Polymermatrix der PET-Flakes ein, wobei diese oberflächlich aufquellen und in der Matrix enthaltenen Kontaminate, wie zum Beispiel kurzkettige polymere Abbauprodukte oder im Gebrauch bzw. nach der Entsorgung in die Polymermatrix eindiffundierte Schadstoffe aus der Polymermatrix herausgelöst werden.

Während das verbrauchte Lösemittel aus der unter der Einlassöffnung liegenden ersten Kammer 10 des Mehrkammer-Extrakteur 8 abgezogen wird, wird dessen letzter Kammer 12 frisches Lösemittel zugeführt. Das verbrauchte, mit Verunreinigungen belastete Lösemittel wird durch eine Leitung 14 zu einer Destillationsanlage 16 geleitet, in der das Lösemittel durch seine Verdampfung von den mitgeführten Verunreinigungen getrennt wird, so dass es nach einer anschließenden Kondensation durch eine Leitung 18 wieder in den Mehrkammer-Extrakteur 8 zugeführt werden kann.

Die behandelten Kunststoffabfälle werden nach einer zur Behandlung erforderlichen Verweilzeit von etwa 60 Minuten zusammen mit dem umgebenden Lösemittel aus der letzten Kammer 12 des Mehrkammer-Extrakteurs 8 abgelassen und über eine Leitung 20 in einen Zentrifugalabscheider 22 geleitet, in dem eine mechanische Reinigung erfolgt und gleichzeitig der größte Teil des Lösemittels mechanisch von den Kunststoffabfällen abgetrennt wird.

Während der Reinigungsphase werden die Kunststoffabfälle und das Lösemittel gemeinsam über eine Leitung 26 in einen Vorlagebehälter 24 abgelassen und dann mittels einer Pumpe 28 über eine Leitung 30 erneut in den Zentrifugalabscheider 22 zurückgeleitet. Nach der Reinigungsphase werden die Kunststoffabfälle und das Lösemittel im Abscheider 22 durch die Zentrifugalwirkung getrennt. Das abgetrennte Lösemittel wird über die Leitung 26 wieder dem Lösemittelvorlagebehälter 24 zugeführt. In Abhängigkeit vom Grad der Verschmutzung des Lösemittels im Lösemittelvorlagebehälter 24 wird ein Teilstrom des Lösemittels über eine Leitung 32 zur Destillationsanlage 16 gefördert und dort zur erneuten Verwendung gereinigt. Über eine weitere Leitung 34 kann bei Bedarf gereinigtes Lösemittel aus der Destillationsanlage 16 in den Lösemittelvorlagebehälter 24 oder direkt in den Abscheider 22 zugeführt werden.

Die Kunststoffabfälle verlassen den Abscheider 22 in lösemittelfeuchtem Zustand und werden anschließend durch eine Leitung 36 in einen Schwimm-Sink-Abscheider 38 zugeführt, in dem sie einer Dichtetrennung in Wasser als Trennmedium unterzogen werden. Bei der Dichtetrennung wird eine überwiegend aus Polyethylen und Polypropylen bestehende Leichtgutfraktion mit einer unter etwa 1 g/cm³ liegenden Dichte von einer aus PET bestehenden Schwergutfraktion mit einer über etwa 1 g/cm³ liegenden Dichte getrennt. Die auf dem Wasser schwimmende Leichtgutfraktion wird im oberen Teil des Abscheiders 38 abgezogen, während die im Wasser absinkende Schwergutfraktion aus dem unteren Teil des Abscheiders 38 abgelassen wird. Beide Fraktionen werden anschließend jeweils in getrennten Flüssigkeitsabscheidern entwässert, beispielsweise zwei Zentrifugalabscheidern 40 bzw. 42, denen sie über Leitungen 44 bzw. 46 zugeführt werden.

Das bei der Schwimm-Sink-Abscheidung verwendete Wasser kann im Kreislauf geführt werden, da die Kunststoffabfälle infolge der Behandlung im Reaktor 8 und im Flüssigkeitsabscheider 22 bei ihrem Eintritt in den Schwimm-Sink-Abscheider 38 keine nennenswerten Mengen an wasserlöslichen Verunreinigungen mehr enthalten. Der Wasserkreislauf umfasst einen Wasservorlagebehälter 48, in den das abgetrennte Wasser aus den Wasserausläufen der beiden Flüssigkeitsabscheider 40 bzw. 42 über Leitungen 50 bzw. 52 zugeführt wird, um es mittels einer Pumpe 54 über eine Leitung 56 in den Schwimm-Sink-Abscheider 38 zurückzuleiten. Ein Teilstrom des Wassers aus dem Wasservorlagebehälter 48 kann über eine Leitung 58 in eine Wasseraufbereitungsanlage 60 ausgeschleust werden, in der das Wasser gereinigt wird. Über eine weitere Leitung 62 kann das gereinigte Wasser oder Frischwasser in den Behälter 48 zugespeist werden.

Während die im Flüssigkeitsabscheider 40 vom Wasser getrennte Polyolefin-Leichtgutfraktion über eine Leitung 64 zur Nachbehandlung in einen Trockner (nicht dargestellt) abtransportiert wird, um dort das Lösemittel und Wasser abzutreiben, wird die im Abscheider 42 vom Wasser getrennte PET-Schwergutfraktion über eine Leitung 66 in einen Vakuumtrockner 68 transportiert, der über eine Leitung 70 an eine Vakuumpumpe 72 angeschlossen ist. Im Trockner 68 werden restliche Lösemittel- und Wasseranteile aus den PET-Flakes entfernt. Dazu wird das PET im Trockner 68 bei einem Druck zwischen etwa 5 mbar und 50 mbar einer erhöhten Temperatur zwischen etwa 170°C und 180°C ausgesetzt. Unter diesen Trocknungsbedingungen und bei einer ausreichenden Verweilzeit im Trockner 68 von vorzugsweise etwa 60 Minuten werden nicht nur das noch an den Oberflächen der PET-Flakes anhaftende Lösemittel und Wasser verdampft, sondern auch das zuvor bei der Behandlung in die Polymermatrix eindiffundierte Lösemittel wieder ausgetrieben. Durch einen dabei auftretenden Schleppeffekt werden beim Austreiben des Lösemittels in der Polymermatrix noch enthaltene Schadstoffe entfernt, wie kurzkettige oligomere, die sich zum Beispiel während der Lebensdauer der PET-Flaschen durch altersbedingte Zersetzung infolge von einfallender UV-Strahlung oder dergleichen gebildet haben.

Um eine thermische und oxidative Schädigung der PET-Flakes zu vermeiden, wird darüber hinaus während der Trocknung ein Inertgas, beispielsweise Stickstoff, aus einer Inertgasquelle 74 ins Innere des Trockners 68 zugeführt und zusammen mit dem abgedampften Lösemittel und den anderen Schadstoffen durch die Vakuumpumpe 72 einer Anlage zur Rückgewinnung von Lösemittel und Inertgas (nicht dargestellt) zugeführt.

Der Trockner 68 ist vorzugsweise mit einem Rührer (nicht dargestellt) ausgestattet, mit dem die PET-Flakes im Trockner 68 zur Verbesserung des Stoff- und Wärmeübergangs umgewälzt werden können.

Nach der Beendigung der Schleppmittel-Vakuumtrocknung und einer abschließenden Belüftung der PET-Flakes mit dem Inertgas kann über eine Austragsleitung 76 ein qualitativ hochwertiges PET-Recyclat aus dem Trockner 68 abgezogen werden.

Eine Nachkondensation des Recyclats ist nicht erforderlich, da seine Polymermatrix praktisch keine Schädigungen aufweist und somit das Recyclat nahezu dieselben Materialeigenschaften wie neuwertiges PET besitzt. Darüber hinaus kann durch Veränderung der Randbedingungen des Trocknungs- und Rekonditionierungs-Vorgangs im Trockner 68, wie Druck, Temperatur und/oder Verweilzeit, die Molekularmasse des PET innerhalb eines gewissen Bereichs auf einen gewünschten Wert eingestellt werden, der demjenigen von neuwertigem PET für den gewünschten Einsatzzweck entspricht.

## Patentansprüche

1. Verfahren zur Aufbereitung von Kunststoffabfällen, die verunreinigtes Polyethylenterephthalat enthalten, bei dem die Kunststoffabfälle kontinuierlich mit einem Ethylacetat enthaltenden organischen Lösemittel behandelt werden und bei dem ein Teil des Lösemittels nach der Behandlung von den Kunststoffabfällen abgetrennt wird, **dadurch gekennzeichnet, dass** das Polyethylenterephthalat nach einer Abtrennung von anderen, in den Kunststoffabfällen enthaltenen Kunststoffen in einem Behälter bei einer Temperatur von 160°C bis 190°C und einem Druck von < 20 mbar einer Vakuumtrocknung unterzogen und dabei mit einem Inertgas gespült wird, um das restliche Lösemittel abzutrennen und das Polyethylenterephthalat zu rekonditionieren.

2. Verfahren nach Anspruch 1, **dadurch gekennzeichnet, dass** die Kunststoffabfälle im Gegenstrom mit dem organischen Lösemittel behandelt werden.

3. Verfahren nach Anspruch 1 oder 2, **dadurch gekennzeichnet, dass** das organische Lösemittel durch Destillation gereinigt und zur Behandlung wiederverwendet wird.

4. Verfahren nach einem der vorangehenden Ansprüche, **dadurch gekennzeichnet, dass** die Kunststoffabfälle nach der Abtrennung eines Teils des Lösemittels einer Dichtetrennung unterzogen werden.

5. Verfahren nach einem der vorangehenden Ansprüche, **dadurch gekennzeichnet, dass** die Vakuumtrocknung bei einem Druck zwischen 5 mbar und 10 mbar erfolgt.

6. Verfahren nach einem der vorangehenden Ansprüche, **dadurch gekennzeichnet, dass** das Polyethylenterephthalat während der Vakuumtrocknung bewegt wird.

7. Verfahren nach einem der vorangehenden Ansprüche, **dadurch gekennzeichnet, dass** bei der Rekonditionierung das in die Polymermatrix des Polyethylenterephthalats eindiffundierte Lösemittel ausgetrieben wird und durch einen Schleppeffekt Schadstoffe mit sich führt.

8. Vorrichtung zur Aufbereitung von Kunststoffabfällen, die verunreinigtes Polyethylenterephthalat enthalten, mit einem Reaktor zur Behandlung der Kunststoffabfälle mit einem Ethylacetat enthaltenden organischen Lösemittel und mit Einrichtungen zur mechanischen Abtrennung eines Teils des Lösemittels von den Kunststoffabfällen nach der Behandlung, **gekennzeichnet durch** Einrichtungen zur Abtrennung des Polyethylenterephthalats von anderen, in den Kunststoffabfällen enthaltenen Kunststoffen und einen mit einem Inertgas beaufschlagbaren Vakuumtrockner (68) zur Trocknung und Rekonditionierung des Polyethylenterephthalats.

9. Vorrichtung nach Anspruch 8, **dadurch gekennzeichnet, dass** der Reaktor ein Gegenstromreaktor (8) ist, durch den das organische Lösemittel im Gegenstrom zu den Kunststoffabfällen hindurchgeführt wird.

10. Vorrichtung nach Anspruch 8 oder 9, **gekennzeichnet durch** Einrichtungen (28, 30) zum Zurückführen eines Teils des von den Kunststoffabfällen abgetrennten Lösemittels in den Flüssigkeitsabscheider (22).

## Claims

1. Process for the treatment of plastics waste that contains contaminated polyethylene terephthalate, in which the plastics waste is continuously treated with an organic solvent containing ethylene acetate and in which part of the solvent is removed from the plastics waste after the treatment, **characterized in that**, after being separated from other plastics contained in the plastics waste, the polyethylene terephthalate is subjected to vacuum drying in a container at a temperature of 160°C to 190°C and a pressure of < 20 mbar and at the same time is flushed with an inert gas in order to remove the residual solvent and recondition the polyethylene terephthalate.

2. Process according to Claim 1, **characterized in that** the plastics waste is treated with the organic solvent in countercurrent.

3. Process according to Claim 1 or 2, **characterized in that** the organic solvent is cleaned by distillation and reused for treatment.

4. Process according to one of the preceding claims, **characterized in that** the plastics waste is subjected to density separation after removal of part of the solvent.

5. Process according to one of the preceding claims, **characterized in that** the vacuum drying is performed at a pressure of between 5 mbar and 10 mbar.

6. Process according to one of the preceding claims, **characterized in that** the polyethylene terephthalate is moved during the vacuum drying.

7. Process according to one of the preceding claims, **characterized in that**, in the reconditioning, the solvent that has diffused into the polymer matrix of the polyethylene terephthalate is driven out and takes harmful substances with it by an entraining effect.

8. Apparatus for the treatment of plastics waste that contains contaminated polyethylene terephthalate, having a reactor for the treatment of the plastics waste with an organic solvent containing ethylene acetate and having devices for the mechanical removal of part of the solvent from the plastics waste after the treatment, **characterized by** devices for separating the polyethylene terephthalate from other plastics contained in the plastics waste, and a vacuum dryer (68), to which an inert gas can be admitted, for the drying and reconditioning of the polyethylene terephthalate.

9. Apparatus according to Claim 8, **characterized in that** the reactor is a countercurrent reactor (8), through which the organic solvent is passed in countercurrent with respect to the plastics waste.

10. Apparatus according to Claim 8 or 9, **characterized by** devices (28, 30) for returning part of the solvent removed from the plastics waste into the liquid separator (22).

## Revendications

1. Procédé en vue du traitement de déchets de matières synthétiques, qui contiennent du téréphtalate de polyéthylène contaminé, lors duquel les déchets de matières synthétiques sont traités en continu à l'aide d'un solvant organique contenant de l'acétate d'éthyle et lors duquel une partie du solvant est séparée après le traitement des déchets de matières synthétiques, **caractérisé en ce que** le téréphtalate de polyéthylène, après une séparation des autres matières synthétiques contenues dans les déchets de matières synthétiques, est soumis à un séchage sous vide dans un récipient à une température de 160°C à 190°C et à une pression < 20 mbars et est rincé, en l'occurrence, à l'aide d'un gaz inerte, pour séparer le solvant restant et reconditionner le téréphtalate de polyéthylène.

2. Procédé selon la revendication 1, **caractérisé en ce que** les déchets de matières synthétiques sont traités à contre-courant à l'aide du solvant organique.

3. Procédé selon la revendication 1 ou 2, **caractérisé en ce que** le solvant organique est purifié par distillation et est à nouveau utilisé en vue du traitement.

4. Procédé selon l'une quelconque des revendications précédentes, **caractérisé en ce que** les déchets de matières synthétiques, après la séparation d'une partie du solvant, sont soumis à une séparation par densité.

5. Procédé selon l'une quelconque des revendications précédentes, **caractérisé en ce que** le séchage sous vide se fait à une pression comprise entre 5 mbars et 10 mbars.

6. Procédé selon l'une quelconque des revendications précédentes, **caractérisé en ce que** le téréphtalate de polyéthylène est mis en mouvement au cours du séchage sous vide.

7. Procédé selon l'une quelconque des revendications précédentes, **caractérisé en ce que**, lors du reconditionnement, le solvant, qui a pénétré par diffusion dans la matrice polymère du téréphtalate de polyéthylène, est expulsé et entraîne avec lui par un effet d'entraînement les substances nocives.

8. Dispositif en vue du traitement de déchets de matières synthétiques, qui contiennent du téréphtalate de polyéthylène contaminé, avec un réacteur en vue du traitement des déchets de matières synthétiques à l'aide d'un solvant organique contenant de l'acétate d'éthyle et avec des équipements en vue de la séparation mécanique d'une partie du solvant des déchets de matières synthétiques après le traitement, **caractérisé par** des équipements en vue de la séparation du téréphtalate de polyéthylène des autres matières synthétiques contenues dans les déchets de matières synthétiques et avec un sécheur sous vide (68) capable d'être alimenté à l'aide d'un gaz inerte, en vue du séchage et du reconditionnement du téréphtalate de polyéthylène.

9. Dispositif selon la revendication 8, **caractérisé en ce que** le réacteur est un réacteur à contre-courant (8), à travers lequel le solvant organique se déplace à contre-courant par rapport aux déchets de matières synthétiques.

10. Dispositif selon la revendication 8 ou 9, **caractérisé par** des équipements (28, 30) en vue de la conduite en retour d'une partie du solvant séparé des déchets de matières synthétiques au séparateur de liquides (22).
